# EUROPÄISCHE PATENTSCHRIFT

(11) **EP 2 210 704 B1**
(45) Veröffentlichungstag und Bekanntmachung des Hinweises auf die Patenterteilung: **21.08.2013**
(21) Anmeldenummer: 10000581.8
(22) Anmeldetag: 21.01.2010
(51) Int. Cl.: B24B 21/14, F16C 13/02, F16C 23/10, F16C 32/06

(54) **Breitbandschleifmaschine mit einem Walzenlager**
Belt grinding machine with bearing for a roller
Ponceuse à bande avec palier pour rouleau

(30) Priorität: 22.01.2009 CH 982009
(43) Veröffentlichungstag der Anmeldung: 28.07.2010
(73) Patentinhaber: Steinemann Technology AG, 9015 St. Gallen (CH)
(72) Erfinder: Moser, Patrik, 9056 Gais (CH); Weber, Heribert, 9320 Frasnacht (CH)
(74) Vertreter: Weiss, Peter

(56) Entgegenhaltungen:
- DE-U- 7 129 854
- US-A- 3 453 031
- US-A- 3 650 582
- US-A- 4 029 323
- US-A- 4 262 455
- US-A- 5 678 931

## Beschreibung

Die Erfindung betrifft eine Breitbandschleifmaschine mit einem Walzenlager, insbesondere ein Walzenlager von Walzen einer Breitschleifmaschine, besonders von einer Breitbandschleifmaschine zum Bearbeiten von Oberflächen von insbesondere flächigen, ebenen Bauelementen, z. B. aus Holz bzw. Holzwerkstoffen.

Walzenlager, insbesondere zur Sicherung eines gleichmässigen und verschleissarmen Rundlaufs von Walzen u. a. sind in vielfältiger Bauart bekannt. Bekannt sind ebenfalls hydrostatische Lager, z. B. Ölfilmlager für Walzenzapfen mit hydrostatischer Unterstützung, wie sie in den WO-A-20051017377 und WO-A-2005/106266 offenbart sind.

Eine Bearbeitungseinrichtung für Papier gemäss WO-A-2008/046960 weist eine Presseinheit auf, bei Stützwalzen hydrodynamisch gelagert sind. Die Stützwalze rollt in einer Kalotte ab, deren Oberfläche ständig mit einem Schmiermittelfilm benetzt ist. Das Schmiermittel wird einer Rille der Kalotte zugeführt.

Bei einem Walzgerüst gemäss WO-A-01/23114 ist die Lagerung am Führungselement ebenfalls als hydrostatisches Lager ausgebildet um ein jeweils bewegtes Gerostteil weitgehend reibungsfrei am jeweiligen Führungselement zu lagern.

In diesem Zusammenhang wird ausserdem auf die US 5 678 931 A oder die US 3 453 031 A hingewiesen. Dort ist jeweils ein Walzenlager mit einer hydrodynamischen Lagerung gezeigt.

Die US 4262455 zeigt eine Bandschleifmaschine mit einem Excenter.

Der Erfindung liegt die Aufgabe zugrunde, ein Walzenlager einer Walze einer Breitbandschleifmaschine zum Bearbeiten von Oberflächen von insbesondere flächigen, ebenen Bauelementen, z. B. aus Holz bzw. Holzwerkstoffen zu entwickeln, das eine spiel- und schwingungsarme Lagerung und Feinverstellung insbesondere von Schleifwalzen ermöglicht.

Die Aufgabe ist mit den Merkmalen des Patentanspruchs gelöst. Jeder Walzenzapfen ist von einem drehbaren Excenter umgeben. Zwischen der Lagerschale des Maschinenständers und dem Excenter ist ein hydrostatisches Lager angeordnet. Dies ermöglicht einerseits eine Feinverstellung der Walze mittels des Excenters und andererseits eine schwingungsdämpfende und spielfreie Walzenlagerung. Die Walze verbleibt ständig achsmittig und Lageverschiebungen der Walze und die zwangsläufige Entstehung von Rattermarken o. dgl. wird vermieden.

Vorgesehen ist ebenfalls eine Sperrluftdichtung um den Ölsumpf zu entleeren.

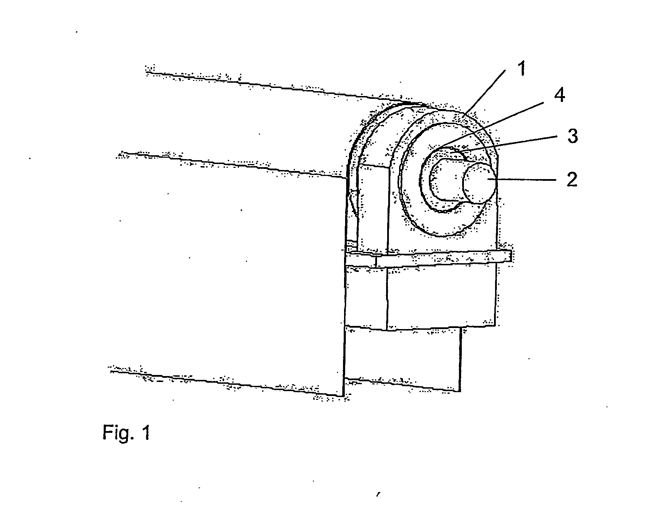

Die Erfindung wird nachfolgend in einem Ausführungsbeispiel anhand einer Zeichnung näher beschrieben. In der Zeichnung zeigen die
Fig. 1: ein Walzenlager

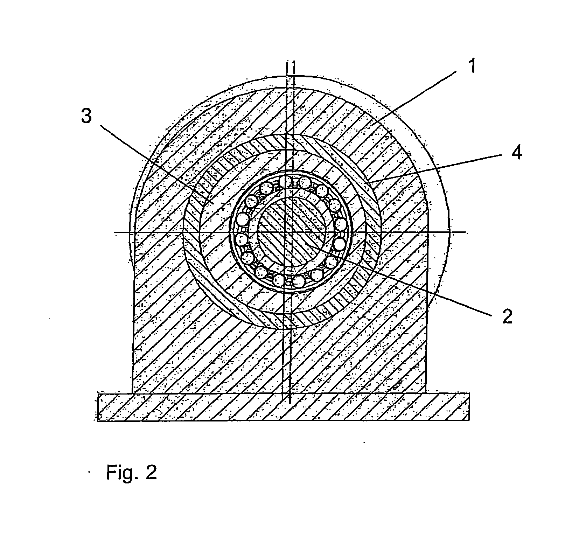

Fig. 2: eine Frontansicht des Lagers.

Ein Lagerzapfen 2 einer Walze einer Breitbandschleifmaschine ist in einer Lagerschale 1 eines nicht explizit dargestellten Maschinenständers 5 aufgenommen. Der Lagerzapfen 2 ist von einem drehbaren Excenter 3 umgeben. Zwischen diesem und der Lagerschale 1 ist ein hydrostatisches Lager 4 vorgesehen, welches dafür sorgt, dass der Lagerzapfen 2 ständig achsmittig verbleibt.

Bei einer oberen Schleifwalze ist ein Überdruck im Gehäuse vorgesehen um austretendes Öl in einen Tank zurückzufördern. Hierzu kann vorzugsweise eine Sperrluftdichtung vorgesehen werden.

### Bezugszeichen

- 1: Lagerschale
- 2: Lagerzapfen
- 3: Excenter
- 4: hydrostatisches Lager
- 5: Maschinenständer

## Patentansprüche

1. Breitbandschleifmaschine mit einem Walzenlager zum Bearbeiten von Oberflächen von insbesondere flächigen, ebenen Bauelementen aus Holz bzw. Holzwerkstoffen, wobei eine Walze in Lagerschalen (1) eines Maschinenständers (5) aufgenommen ist und ein Walzenzapfen (2) der Walze von einem drehbaren Excenter (3) umgeben ist, **dadurch gekennzeichnet, dass** zwischen Excenter (3) und Lagerschale (1) ein hydrostatisches Lager (4) vorgesehen ist.

2. Breitbandschleifmaschine nach Anspruch 1, **dadurch gekennzeichnet, dass** bei einer oberen Schleifwalze ein Überdruck im Gehäuse vorgesehen ist, um austretendes Öl in einen Tank zurückzufördern.

3. Breitbandschleifmaschine nach Anspruch 2, **dadurch gekennzeichnet, dass** zur Erzeugung des Überdrucks eine Sperrluftdichtung im Gehäuse vorgesehen ist.

## Claims

1. A wide belt sanding machine having a roller bearing for the working of surfaces of in particular two-dimensional, plane structural elements of wood or wood-based materials, wherein a roller is received in bearing shells (1) of an upright (5) and a roller journal (2) of the roller is surrounded by a rotatable eccentric (3), **characterised in that** a hydrostatic bearing (4) is provided between eccentric (3) and bearing shell (1).

2. A wide belt sanding machine according to claim 1, **characterised in that** in the case of an upper sanding roller, a pressure in excess of atmospheric pressure is provided in the housing in order to convey issuing oil back into a tank.

3. A wide belt sanding machine according to claim 2, **characterised in that** an air barrier seal is provided in the housing to generate the pressure in excess of atmospheric pressure.

## Revendications

1. Ponceuse à bande avec un palier pour rouleau pour traiter des surfaces en particulier d'éléments de construction plats lisses en bois ou en matériaux à base de bois, un rouleau étant reçu dans des coquilles de roulement (1) d'un support de machine (5) et un tourillon (2) du rouleau étant entouré d'un excentrique rotatif (3), **caractérisée par le fait qu'**entre l'excentrique (3) et la coquille de roulement (1) est prévu un roulement hydrostatique (4).

2. Ponceuse à bande selon la revendication 1, **caractérisée par le fait que** dans le cas d'un rouleau ponceur supérieur est prévue une surpression dans le boîtier, pour repousser l'huile sortante dans un recevoir.

3. Ponceuse à bande selon la revendication 2, **caractérisée par le fait qu'**il est prévu, pour générer la surpression, un joint d'air d'arrêt dans le boîtier.
